# EUROPEAN PATENT APPLICATION

(11) **EP 2 159 376 A2**
(43) Date of publication of application: **03.03.2010**
(21) Application number: 09252079.0
(22) Date of filing: 27.08.2009
(51) Int. Cl.: F01D 5/18

(54) **Airfoil insert and method for cooling an airfoil**

(30) Priority: 28.08.2008 US 200160
(71) Applicant: United Technologies Corporation, Hartford, CT 06101 (US)
(72) Inventor: Devore, Matthew A., Manchester, CT 06040 (US); Surace, Raymond, Newington, CT 06111 (US); Kaufman, Eleanor D., Cromwell, CT 06416 (US); Abdel-Messeh, William, Middletown, CT 06457 (US)
(74) Representative: Tomlinson, Kerry John

(57) **Abstract**

An airfoil insert (10) comprises an insert wall (11), a contact element (14) and a flow director. The insert wall defines an interior (15) extending inside the insert wall from a first end (12) to second end (13), and an exterior (16) extending outside the insert wall from the first end to the second end. The contact element (14) is formed on the exterior of the insert wall (11). The flow director is formed on the insert wall (11) at a boundary between the interior and the exterior. The flow director increases a heat transfer coefficient of convective flow along the insert wall by directing the convective flow to the exterior of the insert wall.
A method for cooling an airfoil (20) is also disclosed.

## Description

### BACKGROUND OF THE INVENTION

The subject matter of this application relates generally to gas turbine engines, and specifically to cooling techniques for the airfoil sections of turbine blades and vanes. In particular, the invention concerns an insert for convective cooling the interior surfaces of turbine airfoils exposed to high-temperature working fluid flow.

Gas turbine engines are built around a power core comprising a compressor, a combustor and a turbine, which are arranged in flow series with a forward (upstream) inlet and an aft (downstream) exhaust. The compressor compresses air from the inlet, which is mixed with fuel in the combustor and ignited to produce hot combustion gases. The hot combustion gases drive the turbine section, and are exhausted with the downstream flow.

The turbine drives the compressor via a shaft or a series of coaxially nested shaft spools, each driven at different pressures and speeds. The spools employ a number of stages comprised of alternating rotor blades and stator vanes. The vanes and blades typically have airfoil cross sections, in order to facilitate compression of the incoming air and extraction of rotational energy in the turbine.

In addition to its use as an oxidant, compressor air is also utilized to cool downstream engine components, particular turbine and exhaust parts exposed to hot gas flow. Depending upon application, compressed air is also utilized for environmental control, pneumatics and other accessory functions.

Energy not used to drive the compressor and provide cooling or accessory functions is available for external use. In ground-based industrial gas turbines, for example, power is typically provided in the form of rotational energy, which is used to drive an electrical generator or other mechanical load. In aviation applications, on the other hand, reactive thrust is generated directly from the exhaust.

In turbofan engines, one of the spools also drives a forward fan or ducted propeller, producing additional thrust from bypass flow directed around the engine core. Turbofans are either directly driven by the low-pressure turbine spool, or employ a reduction gearbox to slow the fan, reducing noise and increasing efficiency.

The majority of commercial aircraft employ high-bypass turbofan engines, which generate most of their thrust from bypass flow. Supersonic jets and other high-performance aircraft typically employ low-bypass turbofans, which rely primarily on reactive thrust from the exhaust. Low-bypass turbofans are louder and less fuel efficient, but provide greater response and specific thrust. Low-bypass turbofans are also commonly configured for afterburning, in which additional fuel is injected into an augmentor assembly downstream of the turbine, where it is ignited to provide additional thrust.

The main goals in gas turbine engine design are efficiency, performance and reliability. Efficiency and performance both favor high combustion temperatures, which increase the engine's thermodynamic efficiency, specific thrust, and maximum power output. Unfortunately, high combustion temperatures also increase thermal and mechanical loads, particularly on turbine airfoils downstream of the combustor. This reduces service life and reliability, and increases operational costs associated with maintenance and repairs.

There is thus a need for enhanced turbine airfoil cooling techniques. In particular, there is a need for techniques that not only improve cooling efficiency, reducing the required cooling fluid mass flow rate and resulting energy losses, but also improve cooling efficacy, reducing thermal stresses, extending service life and increasing reliability.

### BRIEF SUMMARY OF THE INVENTION

This disclosure concerns an airfoil insert for convective cooling and a method of cooling using the insert. The insert comprises an insert wall, a contact element and a flow director. The insert wall defines an interior region extending inside the insert from a first end to a generally opposed second end, and an exterior region extending along the outside of the insert from the first end to the second end.

The contact element is formed on the exterior of the insert wall between the first end and the second end, for attaching the insert to an airfoil and for spacing the insert wall from the internal airfoil surfaces. The flow director is formed on the insert wall at a boundary between the exterior and interior, and increases the heat transfer coefficient of convective flow along the insert by directing the convective flow to the exterior region, between the insert wall and the surface of the cooling passage.

The method comprises positioning the insert along an internal surface of an airfoil, spacing the insert from the internal surface, and restricting convective flow along the insert to a region between the insert and the inner surface. This increases the Reynolds number of the convective flow, which in turn increases the heat transfer coefficient.

### BRIEF DESCRIPTION OF THE DRAWINGS

FIG. 1 is a cross-sectional schematic of an airfoil insert and airfoil.

FIG. 2A is a top schematic view of an airfoil section and insert, in an embodiment with a collar and an inlet for internal flow.

FIG. 2B is a top schematic view of an airfoil section and insert, in an embodiment with spacing tabs and an upstream flow stop.

FIG. 3A is a top schematic view of an airfoil section and insert, in an embodiment with spacing ribs and an upstream flow stop.

FIG. 3B is top schematic view of an airfoil section and insert, in an embodiment with spacing ribs and multiple inlets for internal flow.

FIG. 4A is a perspective view of an airfoil insert with indirect convective flow apertures and a downstream outlet.

FIG. 4B is a perspective view of an airfoil insert with supplemental convective flow apertures and a downstream flow stop.

FIG. 5A is a top schematic view of a U-shaped (open-geometry) insert and airfoil section.

FIG. 5B is a perspective view of the insert in FIG. 5A.

FIG. 6A is a top schematic view of a two-panel (open-geometry) insert and airfoil section.

FIG. 6B is a perspective view of the insert in FIG. 6A.

### DETAILED DESCRIPTION

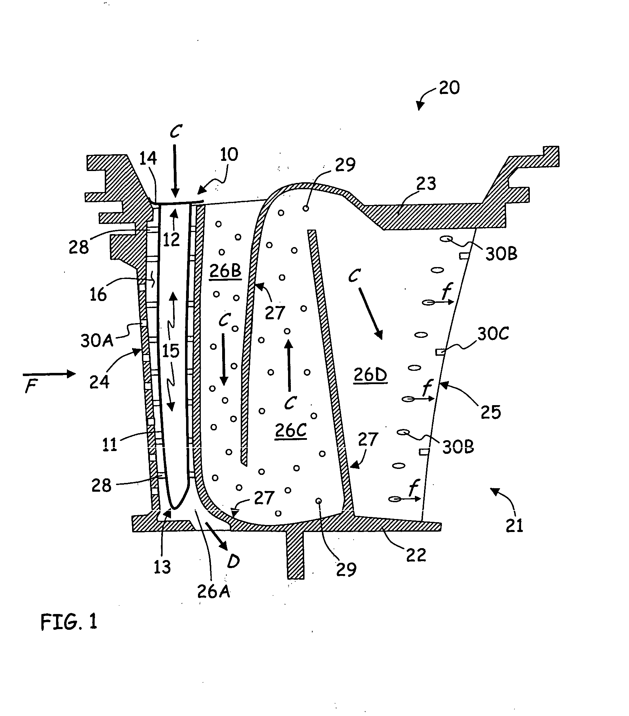

FIG. 1 is a cross-sectional schematic of insert 10 for airfoil 20. Insert 10 comprises insert wall 11 with first end 12, second end 13 and contact element 14 for attaching insert 10 to airfoil 20 and for positioning insert wall 11 within airfoil section 21. Insert 10 increases the heat transfer coefficient of convective flow by directing the convective flow around insert wall 11, away from internal region 15 and into external region 16, between insert wall 11 and airfoil section 21.

Airfoil 20 comprises airfoil section 21, inner platform 22 and outer platform 23. Airfoil section 21 extends axially between leading edge 24 and trailing edge 25, and radially between platforms 22 and 23. Internal cooling passages 26A, 26B, 26C and 26D are defined along internal surfaces 27 of airfoil section 21. Augmentors such as trip strips 28 and pedestals 29 are formed along internal surfaces 27 of passages 26A, 26B and 26C, in order to increase turbulence and improve internal cooling. Film cooling holes 30A, 30B and 30C provide cooling fluid to external surfaces of airfoil section 21 that are exposed to hot working fluid flow.

In the particular embodiment of FIG. 1, airfoil 20 is a stationary turbine vane for use in a turbojet or turbofan engine. In this embodiment, airfoil 20 is typically attached to a turbine case or flow duct at inner platform 22 and outer platform 23, using mechanical coupling structures such as hooks or by forming platforms 23 as part of a case or shroud assembly. In other embodiments, airfoil 20 is configured for use in an industrial gas turbine engine, and platforms 22, 23 are modified accordingly.

Alternatively, airfoil 20 is formed as a rotating blade. In these embodiments, airfoil section 21 is typically formed into a tip at outer platform 23, and inner platform 22 accommodates a root structure or other means of attachment to a rotating shaft. In further embodiments, airfoil 20 is provided with additional structures for improved working fluid flow control, including, but not limited to, platform seals, knife edge seals, tip caps and squealer tips.

Airfoil 20 is exposed to a generally axial flow of combustion gas F, which flows across airfoil section 21 from leading edge 24 to trailing edge 25. Flow F has a radially inner flow margin at inner platform 22, and a radially outer flow margin at outer platform 23, or, in blade embodiments, at the blade tip.

To protect airfoil 20 from wear and tear due to the working fluid flow, its various components are manufactured from durable, heat-resistant materials such as high-temperature alloys and superalloys. Typically, surfaces that are directly exposed to hot gas are also coated with a protective coating such as a ceramic thermal barrier coating (TBC), an aluminide coating, a metal oxide coating, a metal alloy coating, a superalloy coating, or a combination thereof.

Airfoil 20 is manufactured as a hollow structure with internal cooling passages 26A, 26B, 26C and 26D. The cooling passages are defined along internal surfaces 27, forming channels or conduits for cooling fluid flow through airfoil section 21. In turbofan embodiments, the cooling fluid is usually provided from a compressed air source such as compressor bleed air. In ground-based industrial gas turbine embodiments, other fluids such as steam are also used.

The flow of cooling fluid depends upon the particular configuration of airfoil 20. In the embodiment of FIG. 1, for example, cooling flow *C* is radially inward through leading edge cooling passage 26A (in the direction from outer platform 23 toward inner platform 22), and exits cooling passage 26A in downstream cooling flow direction *D*. In serpentine passages 26B, 26C and 26D, cooling fluid flow *C* alternates back and forth between radially inward and radially outward directions, with regions of substantial axial and rearward flow in between.

As shown in FIG. 1, trip strips (or turbulators) 28 are provided to improve cooling along internal passage 26A, and pedestals (or pins) 29 are provided to improve cooling along internal passages 26B and 26C. In other embodiments, a combination of trip strips 28, pedestals 29 and other cooling augmentation structures such as dimples or warts are provided along any or all of internal cooling passages 26A, 26B, 26C and 26D, including passages occupied by insert 10.

Airfoil 20 also employs external cooling, in which additional cooling fluid is directed from cold internal surface(s) 27 to the hot (outer) surfaces of airfoil section 21. The cooling fluid is directed through a combination of film cooling hole structures, including, but not limited to, "showerhead" openings 30A in cooling passage 26A along leading edge 24, film cooling holes 30B in passage 26D, and film cooling slots 30C along trailing edge 25.

Like airfoil 20, insert 10 is manufactured from a durable, heat-resistant material such as a metal alloy or superalloy. In typical embodiments, insert 10 is not provided with a TBC coating because insert wall 11 is not directly exposed to hot combustion gas flow. In other embodiments, an anti-oxidant coating or other protective coating is applied. In further embodiments, insert 10 is provided with a flame spray coating or other coating for forming a fluid seal, a contact surface, a coupling or a mechanical attachment between insert wall 11 and airfoil section 21.

As shown in FIG. 1, insert 10 is positioned along cooling passage 26A in a downstream cooling flow direction, such that first end 12 is an upstream end and second end 13 is a downstream end. In other configurations the flow is reversed, or insert 10 is inserted from inner platform 22 rather than outer platform 23, such that the upstream and downstream ends are interchanged.

Insert wall 11 defines internal region 15, extending along the inside (interior) of insert 10 between first end 12 and second end 13, and external region 16, extending along the outside (exterior) of insert 10 between first end 12 and second end 13. External region 16 also extends along cooling passage 26A, between insert wall 11 and internal surface 27 of airfoil section 21.

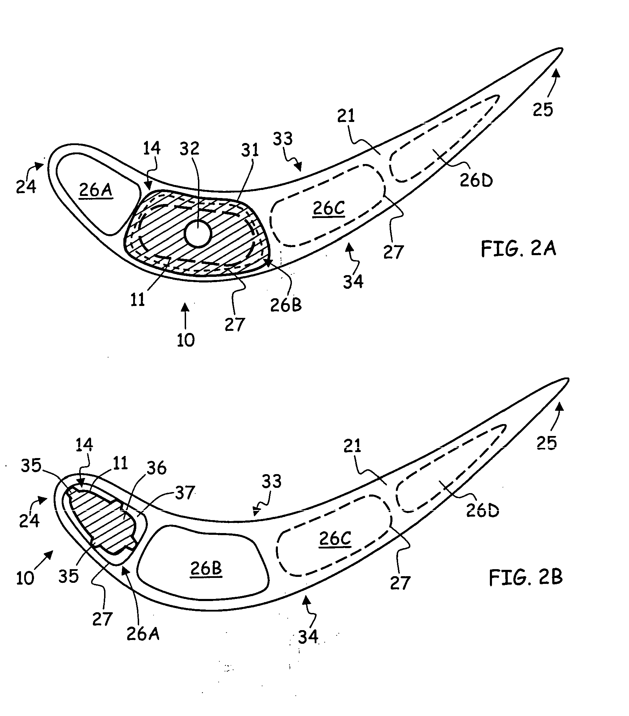

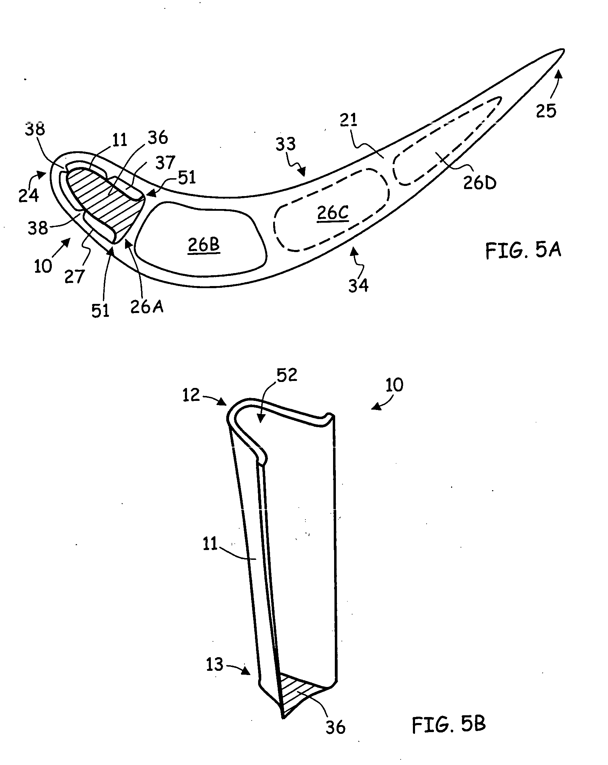

In some embodiments, insert wall 11 has a closed-tube geometry in which interior 15 and exterior 16 are defined along a substantially complete cross-sectional perimeter (see, e.g., FIGS. 2A-4B). Alternatively, insert wall 11 has a U-shaped, C-shaped, two-panel or other open-tube geometry, in which interior region 15 is bounded on at least one side by internal surfaces 27 (that is, the inner or interior surfaces of the cooling passages inside airfoil section 21; see, e.g., FIGS. 5A-6B).

The particular form of contact element 14 varies. In the closed-geometry embodiment of FIG. 1, for example, contact element 14 comprises a collar formed onto the upstream end of insert wall 11, for attaching insert 10 to airfoil 20 and for spacing insert wall 11 from internal surfaces 27 of cooling passage 26A. Insert 10 also provides convective flow apertures (see below) that direct convective flow along exterior region 16, and an inlet to maintain a positive overpressure for non-convective flow through internal region 15, in order to generate downstream cooling fluid flow *D* at second end 13.

Insert 10 increases the heat transfer coefficient within airfoil 20 by directing flow around insert wall 11, excluding convective flow from internal region 15 and restricting it to external region 16. Essentially, the heat transfer coefficient varies with the Reynolds number, which describes the ratio of inertial to viscous forces (inertial and viscous effects) in the flow. When convective flow is restricted to external region 16, the flow area is reduced and the impedance rises. The convective flow becomes less laminar and more turbulent, increasing the Reynolds number. This enhances flow interactions along internal surfaces 27 of cooling passage 26A, allowing greater thermal transfer from airfoil section 21.

In some embodiments, convective flow is also described in terms of Mach number. In these embodiments, insert 10 produces Mach acceleration in the convective flow, increasing the heat transfer coefficient by generating greater turbulence and other flow interactions in the region between insert wall 11 and internal airfoil surfaces 27.

Increasing the heat transfer coefficient enhances convective cooling within airfoil section 21. In particular, insert 10 lowers operating temperatures and thermal gradients, reducing thermal stresses and increasing service life. Insert 10 also reduces the cooling flow required to achieve these benefits, improving cooling efficiency and reserving capacity for additional downstream cooling loads.

FIG. 2A is a top schematic view of airfoil section 21 and insert 10, located in midbody cooling channel 26B (shown in hidden lines). In this embodiment, insert 10 comprises contact element 14 with collar 31 and inlet 32 for directing flow to the interior of insert wall 11.

Airfoil section 21 extends axially between leading edge 24 and trailing edge 25, along pressure or concave side 33 (the upper surface in FIG. 2A) and suction or convex side 34 (the lower surface). Internal cooling passages 26A-26D are defined along internal airfoil surfaces 27, and extend in a generally radial sense along airfoil section 21 (that is, into the plane of the figure).

As shown in FIG. 2A, leading edge cooling passage 26A and first midbody cooling passage 26B exhibit open-ended designs, and each is configured to accept particular embodiments of insert 10 (see, e.g., FIG. 2B, below). Second midbody cooling passage 26C and trailing edge cooling body 26D exhibit closed-end geometries (shown in dashed or hidden lines), and are not configured for insert 10. In alternate embodiments, different combinations of cooling passages 26A, 26B, 26C and 26D have open-ended designs, and any of the passages can be configured to accept an embodiment of insert 10.

In this particular embodiment, Insert 10 is located in first midbody cooling passage 26B. Collar 31 provides means for positioning insert 10 within cooling passage 26B, such that collar 31 extends outside of cooling passage 26B and insert wall 11 is spaced within cooling passage 26B. Internal surface 27 defines the outside edge of cooling passage 26B, which is located between the outside edge of insert 11 (inside the cooling passage) and the outside edge of collar 31 (outside the cooling passage).

Collar 31 also provides means for attaching insert 10 to airfoil section 21, for example by welding or brazing, by thermal or friction fitting, or by forming a mechanical attachment via a flame spray coating or other material applied to insert wall 11 or to internal surface 27 of cooling passage 26B. In some embodiments, the attachment features are constructed such that insert 10 is removable for adjustment and repair. In other embodiments, insert 10 is permanently attached to airfoil 21. In these embodiments, insert 10 also functions as a cast-in wall within cooling passage 26B, without requiring the same complex manufacturing steps.

In the particular embodiment of FIG. 2A, collar 31 is formed on the exterior of insert 10 at the upstream end (or first end) of insert wall 11, and extends beyond the cross-sectional area of cooling passage 26B. In other embodiments, collar 31 is formed within the cross-sectional area of cooling passage 26B, and is located anywhere between the first and second ends of insert 10. In further embodiments, a number of collars 31 or other spacing and attachment means are provided at various locations along insert wall 11.

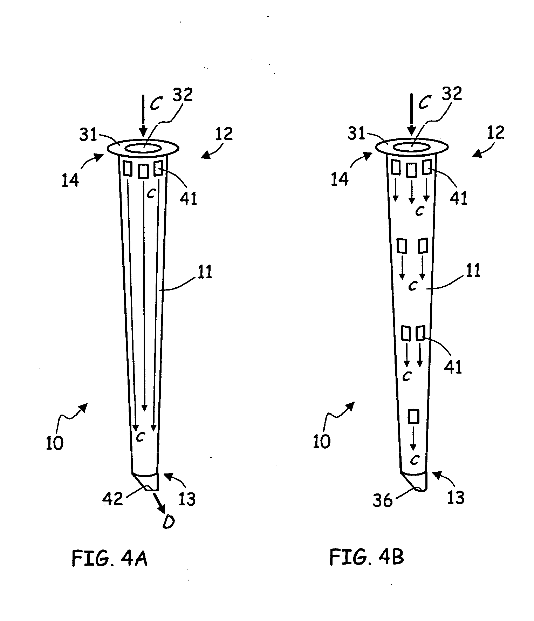

Inlet 32 is typically formed by stamping, drilling, cutting or machining an opening or orifice on the upstream end of insert wall 11. Inlet 32 defines a boundary between the interior and exterior of insert wall 11, and directs flow through this boundary into insert 10. The internal flow is provided with a positive overpressure, as compared to the exterior flow, and is utilized for downstream cooling functions. In some embodiments, for example, the internal flow is converted to convective flow via a number of indirect (downstream) apertures in insert wall 11, and in other embodiments the internal flow is conducted through an outlet to a downstream cooling load (see FIGS. 4A and 4B).

FIG. 2B is top schematic view of airfoil section 21 and insert 10, located in leading edge cooling channel 26A. In this embodiment, insert 10 comprises contact element 14 with spacing tabs 35 and flow stop 36, for directing flow to the exterior of insert wall 11 via direct-flow convection apertures 37.

Spacing tabs 35 comprise spacing and contact or coupling members formed onto the exterior of insert wall 11 via techniques such as stamping, welding, brazing, milling, molding, cutting and machining, as described above for collar 31 of FIG. 2A. Similarly, spacing tabs 35 provide means to position insert 10 within cooling channel 26A, spacing insert wall 11 from internal surfaces 27 of airfoil section 21, and means for attaching insert 10 to airfoil section 21, within cooling passage 26A.

In some embodiments, spacing tabs (or fingers) 35 extend within the cross-sectional area of cooling passage 26A, and are provided anywhere along the length of insert 10 between the upstream and downstream ends of insert wall 11. Alternatively, spacing tabs 35 are provided at the first (upstream) end of insert wall 11, and sometimes extend beyond the cross-sectional area of cooling passage 26A, as described above for collar 31 of FIG. 2A.

Direct-flow convection apertures 37 are sometimes co-formed with contact element 14, for example by defining the apertures between tabs 35. Apertures 37 direct cooling fluid flow around insert 10, into the convective flow region between insert wall 11 and internal surface(s) 27 of airfoil section 21.

In some embodiments, spacing tabs 35 are adjustable by bending, twisting, turning or similar mechanical manipulation, in order to change the spacing between insert wall 11 and cooling passage 26A, or to change the dimensions of apertures 37. This allows the convective flow rate and heat transfer coefficient to be adjusted to suit the particular cooling needs of airfoil section 21.

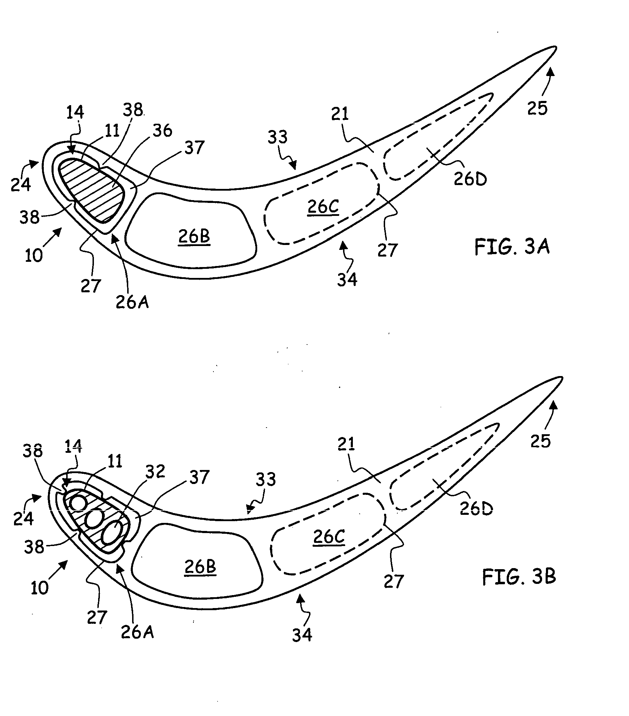

FIG. 3A is top schematic view of airfoil section 21 and insert 10, located in leading edge cooling channel 26A. In this embodiment insert 10 contacts the interior airfoil surface along spacing ribs 38 formed on the wall of the cooling passage, and flow stop 36 directs flow to the exterior of insert wall 11 via direct-flow convection apertures 37.

Spacing ribs 38 comprise spacing and attachment members formed by casting, welding, brazing, milling, molding, cutting or machining internal cooling passage 26A. Spacing ribs 38 provide means for spacing insert wall 11 from internal surface(s) 27 of cooling passage 26A, and for attaching airfoil section 21 to insert 10 along contact element 14.

As shown in FIG. 3A, one spacing rib 38 is provided along cooling passage 26A opposite pressure surface 33 of airfoil section 21, and another rib 38 is provided opposite suction surface 34. In alternate embodiments, one, two, three or more ribs 38 are located opposite any of pressure surface 33, suction surface 34, leading edge surface 24 or trailing edge surface 25. In further embodiments, pin-fins and other stand-off features are utilized instead of ribs, where these features have various different cross-sectional geometries.

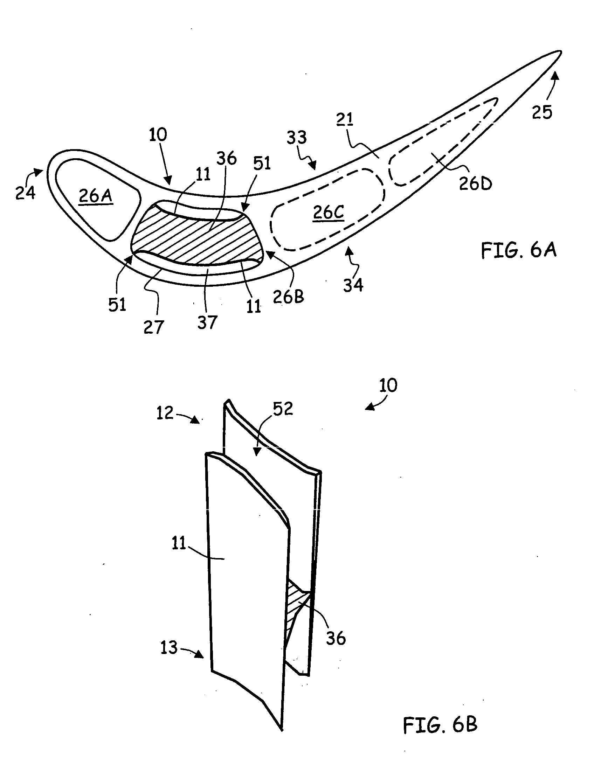

Flow stop 36 comprises a plug, wall, baffle, flow block or other structure formed across insert wall 11, using any of the mechanical fabrication techniques described above. As shown in FIG. 3A, stop 36 is an upstream flow stop, formed onto the upstream end of insert wall 11 at the boundary between the internal and external regions of insert 10. In other embodiments, flow stop 36 is a downstream stop, formed onto the downstream end of insert 10, or an intermediate stop, formed anywhere along insert wall 11 (see, e.g., FIGS. 6A and 6B).

Flow stop 36 blocks flow to the interior of insert wall 11, stopping the internal flow through insert 10. Convective flow is directed through apertures 37 to the exterior of insert 10, to the convective region along cooling passage 26A, between insert wall 11 and internal surfaces 27 of airfoil section 21.

FIG. 3B is a top schematic view of airfoil section 21 and insert 10, located in leading edge cooling channel 26A. Insert 10 contacts the inner airfoil surface along ribs 38, as shown in FIG. 3A, above, and directs convective flow through apertures 37. In this embodiment, however, insert 10 also provides internal flow via multiple inlets 32.

FIGS. 2A, 2B, 3A and 3B illustrate a range of representative embodiments in which the various contact, coupling, attachment, spacing and flow direction elements take on a variety of different forms. The numbers, sizes and shapes of individual collar, inlet, aperture, tab, inlet, stop and rib elements also vary, in order to generate a desired ratio of convective (exterior) and non-convective (internal) flow, and to regulate these flows in a desired manner around the exterior and interior of insert wall 11. In some embodiments, individual flow direction elements are also adjustable by rotating, sliding, bending or other mechanical manipulation, in order to provide additional flow regulation. In these embodiments, some flow direction structures operate as valves or provide analogous variable-area component functions.

FIGS. 4A and 4B are perspective views of airfoil insert 10 with indirect-flow convection apertures 41. In these embodiments, insert 10 comprises contact element 14 with collar 31 and inlet 32 for directing cooling flow *C* to the interior of insert wall 11, and indirect convection apertures 41 for converting the interior flow to convective flow c along the exterior of insert wall 11.

Indirect convective flow apertures 41 are formed into insert wall 11 downstream of inlet 32, using one or more of the mechanical techniques described above. In contrast to direct-flow apertures, however, which direct convective flow around insert wall 11, indirect-flow apertures 41 generate flow through insert wall 11, converting the internal (non-convective) flow inside insert 10 to an external (convective) flow on the outside of insert 10.

The number, sizes, shapes and locations of indirect-flow apertures 41 vary, depending upon the desired convective flow rate along insert wall 11. In the embodiment of FIG. 4A, for example, a number of substantially rectangular apertures 41 are formed in an upstream region of insert wall 11, proximate first end 12. In FIG. 4B, supplemental convective flow apertures 41 are also formed between first (upstream) end 12 and second (downstream) end 13. In further embodiments, apertures 41 are formed with circular, oval, triangular, slotted or other geometries, in order to provide desired rates of convective flow for a range of different airfoil and cooling passage geometries.

Convective flow apertures 41 are distinguished from impingement holes and related structures, which direct relatively high-pressure flow away from insert wall 11 in order to impinge on interior airfoil surfaces. In contrast, insert 10 maintains a relatively low overpressure, so that the flow through apertures 41 is generated with a generally parallel sense along the exterior of insert wall 11. This produces a substantially convective flow, rather than an impingement flow. Similarly, direct flow apertures 37 (above) generate convective flow that is directed along insert wall 11, rather than impingement jets that are directed away from insert wall 11 and toward interior surfaces of the airfoil.

In the embodiment of FIG. 4A, outlet 42 is formed in downstream end 13 of insert wall 11 via techniques similar to those described above for inlet 32. Outlet 42 converts the internal flow to downstream flow *D*, which supplies a downstream cooling load such as a serpentine cooling passage, a platform or shroud cooling system, or another airfoil. In contrast to designs that commingle the convective and downstream flows, insert wall 11 also provides a shielded cooling flow conduit that isolates the interior (non-convective) flow from the exterior (convective) flow. This allows insert 10 to generate downstream flow *D* at lower temperatures than non-shielded designs, further improving cooling efficiency.

Alternatively, insert 10 is provided with downstream flow stop 36, as shown in FIG. 4B. In this embodiment, flow stop 36 stops flow through the interior of insert 10, and directs additional convective flow along the exterior of insert wall 11.

The cross-sectional profile of insert 10 is configurable to control heat pick up and absorption, to augment heat transfer, and to limit pressure losses along the internal cooling passage, while maintaining a positive overpressure within insert wall 11. Thus insert 10 and insert wall 11 take on a variety of shapes and forms.

In FIG. 2A, for example, insert 10 exhibits a relatively regular oval or oblate geometry, which does not necessarily conform to the surface of the cooling passage. In FIGS. 4A and 4B, insert wall 11 exhibits a taper, such that the cross section decreases between upstream end 12 and downstream end 13. Alternatively, insert wall 11 conforms to the interior of the cooling passage, as shown in FIGS. 3A and 3B. In these embodiments, insert 10 sometimes accommodates bends or angles along the cooling passage, as shown in FIG. 1, so that the spacing between insert wall 11 and the internal airfoil surfaces is closely controlled. This allows insert 10 to perform the functions of a secondary or cast-in wall, but with significantly less manufacturing complexity and cost than other designs. Insert 10 is also configurable to be removable for maintenance and repair, while cast-in walls are typically permanent structures.

In each of the above embodiments, insert 10 exhibits a generally closed geometry in which insert wall 11 has a generally tubular or annular cross section, which forms a substantially complete perimeter boundary between the interior (non-convective) and exterior (convective) regions. In other embodiments, insert wall 11 exhibits an open configuration, in which the boundary extends to at least one interior surface of the airfoil.

FIGS. 5A and 5B are a top schematic view and a perspective view, respectively, of U-shaped (open-geometry) insert 10 for airfoil section 21. In this embodiment, insert wall 11 comprises a unitary structure with a substantially open U-shaped or C-shaped cross section.

As shown in FIG. 5A, insert 10 is spaced from internal surfaces 27 via ribs 38. In this embodiment, contact elements are formed along the extent of insert wall 11, where it contacts ribs 38, and insert 10 contacts airfoil section 21 at seals 51.

The overpressure within insert wall 11 is maintained via seals 51 along internal surface 27 of cooling passage 26A, which complete the boundary between the interior (non-convective) and exterior (convective) flow regions of insert 10. The seals typically extend from first end 12 to second end 13 of insert wall 11 (see FIG. 5B).

Flow stop 36 works in cooperation with seals 51 to direct flow from feed 52 through apertures 37, but restricts convective flow to internal surfaces 27 of cooling passage 26A opposite leading edge 24, pressure side 33 and suction side 34. This increases cooling efficiency by reducing flow along the interior wall between cooling passages 26A and 26B, where there is no exposure to hot working fluid.

FIGS. 6A and 6B are a top schematic view and a perspective view, respectively, of two-panel (open-geometry) insert 10 for airfoil section 21. In this embodiment, insert wall 11 comprises a two-panel structure with a substantially open cross section.

As shown in FIG. 6A, insert 10 contacts airfoil section 21 along four seals 51, which extend along insert wall 11 from first end 12 to second end 13 (see FIG. 6B). Convective flow from feed 52 is directed along midbody cooling channel 26B through apertures 37, and restricted to internal airfoil surfaces 27 opposite pressure side 33 and suction side 34. This reduces flow along the interior walls between channel 26B and cooling passages 26A and 26C, where there is no exposure to working fluid flow.

The present invention has been described with reference to preferred embodiments. The terminology used is for the purposes of description, not limitation, and workers skilled in the art will recognize that changes may be made in form and detail without departing from the scope of the invention, which is defined by the claims.

## Claims

1. An airfoil (20) comprising:
an airfoil section (21) comprising a leading edge (24), a trailing edge (25), pressure (33) and suction (34) surfaces defined between the leading edge and the trailing edge, and an inner surface (27) defming an internal cooling passage (26A-D); and
an insert (10) comprising an insert wall (11) and a flow director for restricting convective flow to a region (16) between the insert wall and the inner surface of the airfoil section.

2. The airfoil of claim 1, further comprising augmentors (28, 29) formed along the internal cooling passage to augment convective heat transfer along the inner surface of the airfoil section; and preferably wherein the augmentors comprise at least one of trip strips, turbulators, pins, dimples, warts and pedestals.

3. The airfoil of claim 1 or 2, wherein the contact element comprises a collar (31) for spacing the insert wall from an internal cooling passage of an airfoil.

4. The airfoil of claim 1, 2 or 3, further comprising a plurality of ribs (38), pin-fins or other stand-off features of various cross-section, formed along the internal cooling passage for spacing the insert wall from the inner surface of the airfoil section.

5. The airfoil of claim 1, 2, 3 or 4, further comprising a contact element (35) formed on an exterior of the insert wall for spacing the insert wall from the inner surface of the airfoil section; preferably wherein the contact element comprising tabs (35) for spacing the insert wall from an internal cooling passage of an airfoil; and further preferably wherein the tabs define the convection flow apertures therebetween.

6. The airfoil of any preceding claim, wherein the flow director comprises a convection flow aperture (37, 41) for directing convective flow to the region between the insert wall and the inner surface of the airfoil.

7. The airfoil of claim 6, wherein the flow director further comprises an inlet (32) for conducting flow into an interior of the insert wall.

8. The airfoil of claim 7, wherein the convection flow aperture (41) is formed in the insert wall.

9. The airfoil of claim 7 or 8, further comprising an outlet (42) for conducting flow from the interior of the insert wall to a downstream cooling load.

10. The airfoil of any of claims 1 to 8, wherein the flow director further comprises a flow stop (36) for stopping flow through an interior of the insert wall.

11. The airfoil of any preceding claim, wherein the insert wall has a substantially closed cross-sectional geometry (Figs. 1-4B).

12. The airfoil of any of claims 1 to 10, wherein the insert wall has a substantially open cross-sectional geometry (Figs. 5A-6B) and forms a seal (51) against the internal cooling passage; preferably wherein the open cross-sectional geometry is formed by a unitary U-shaped or C-shaped structure (Fig. 5B), or wherein the open cross-sectional geometry is formed by two panels (Fig. 6B).

13. The airfoil of any preceding claim, further comprising a flame spray coating on the insert wall attaching the insert along the internal cooling passage of the airfoil.

14. A method for cooling an airfoil (20), the method comprising:
positioning an insert (10) along an internal surface (27) of the airfoil;
spacing the insert from the internal surface; and
restricting convective flow along the insert to a region (16) between the insert and the internal surface, such that a Reynolds number of the convective flow is increased.

15. The method of claim 14, further comprising directing non-convective flow into an interior (15) of the insert; and preferably further comprising converting the non-convective flow to the convective flow and/or further comprising conducting the non-convective flow to a downstream cooling load.
